# EUROPEAN PATENT SPECIFICATION

(11) **EP 4 572 948 B1**
(45) Date of publication and mention of the grant of the patent: **24.09.2025**
(21) Application number: 24704015.7
(22) Date of filing: 09.02.2024
(51) Int. Cl.: B29C 67/24, B29C 41/00, B29K 75/00, B29L 31/00

(54) **POLYUREA SANITARY SURFACE UNIT AND METHOD OF PRODUCING SAME**
POLYHARNSTOFF-SANITÄROBERFLÄCHENEINHEIT UND VERFAHREN ZUR HERSTELLUNG DAVON
UNITÉ DE SURFACE SANITAIRE EN POLYURÉE ET SON PROCÉDÉ DE PRODUCTION

(30) Priority: 16.02.2023 CH 1502023
(43) Date of publication of application: 25.06.2025
(73) Proprietor: GriP Safety Coatings AG, 6403 Küssnacht am Rigi (CH)
(72) Inventor: STELKER, Dieter, 54320 Waldrach (DE); BRÄUNINGER, Thilo, 6442 Gersau (CH)
(74) Representative: Hepp Wenger Ryffel AG
(86) International application number: PCT/EP2024/053300
(87) International publication number: WO 2024/170428

(56) References cited:
- EP-A1- 3 112 117
- CN-U- 204 049 430
- US-A1- 2003 047 836

## Description

### Technical domain

The present invention concerns a method of producing a sanitary surface unit as well as sanitary appliances or equipment comprising said surface unit.

### Related art

Surfaces of sanitary appliances are exposed to repeated and severe mechanical and chemical impacts, and susceptible to abrasion and damage due to regular use and cleaning chemicals. Protective surfaces must therefore meet particularly high standards in terms of hardness as well as resistance to macro and micro-damages, for example fissures, scratches and cracks. The integrity of the protective surface is crucial, as it does not only contribute to the longevity of the appliance, but is also important for hygiene, since microbes, such as bacteria and mould fungi, can thrive in fissures and cracks of a damaged coating.

CN 204049430 U (GUANGZHOU TONWELL TECH CO LTD, 31 December 2014), EP 3112117 A1 (CONSTRUPLAS, S.L., 04 January 2017) and US 2003/047836 A1 (RICKNER, 13 March 2003) each disclose a method for providing a sanitary surface unit.

Sanitary appliances, in particular shower trays, bathtubs and wash basins are commonly produced using enamelled steel, mineral casting and acrylic glass, more specifically sanitary acrylic such as polymethyl methacrylate (PMMA).

Ceramic surfaces are hard, smooth and easy to clean. However, these surfaces are easily damaged by hard or pointed objects hitting he surface, which may result in cracks and fissures in the appliance.

Enamel is a mixture of quartz, feldspar, soda, metal oxides, borax and potash. To coat a steel substrate, for example a shower tray with this material, the applied layer of enamel needs to be heated to high temperatures to form a hard, glass-like layer. The production of enamelled sanitary appliances requires a significant amount of thermal energy. The enamel coating is shockproof, but easily damaged by hard hitting pointed objects. Moreover, exposure to acids dulls the surface over time.

Sanitary acrylic material may comprise a mixture of acryl- of polyester resins, as well as natural minerals. Sanitary appliances made of sanitary acrylic are lightweight and easy to clean. However, solvents, heat and scouring agents contained in cleaners may cause damage to the acrylic material. For the production of sanitary acrylic appliances, sheets of sanitary acrylic are heated and shaped under negative pressure.

Sanitary appliances, and in particular the surfaces of these appliances must meet strict regulatory requirements before they can be safely provided in the market.

CE marking, affirming the products conformity with applicable health, safety and protection standards in Europe, are only applied to the products when product specific norms are met.

For shower trays the applicable norm to be met is the German DIN norm 14527 (DIN EN 14527:2019-06), defining requirements of durability, including chemical resistance of the product, resistance to temperature changes, and stability of the tray, and well as the drainage of water, the appearance of the surface, and its cleanability.

Given the drawbacks of the commonly used sanitary surface materials, there is room for improvement and alternatives. Short disclosure of the invention

It is an aim of the present invention to provide a sanitary surface which can be readily produced at scale.

It is a further aim that the method reproducibly produces a surface of consistent quality.

Preferably, the sanitary surface should be durable and resilient, such as to meet regulatory requirements for sanitary surfaces and/or appliances.

It is yet another aim of this invention that the surface can be produced in a time-efficient manner.

Preferably the fabrication method should be environmentally friendly. Preferably the fabrication method should also be energy efficient.

It is yet another aim of this invention to provide an alternative sanitary surface. It is also an aim to provide an alternative method for producing said alternative sanitary surface.

According to the invention, one or more of these aims are attained by the object of the attached claims, and especially by the independent claims. Dependent claims disclose advantageous embodiments of the invention.

In particular, one or more of these aims are attained by a method for providing a protective surface unit for a sanitary appliance, comprising providing a negative mould of the desired shape of the sanitary surface unit, applying a layer of a liquid polyurea composition, preferably a poly-aspartic acid ester composition, onto the mould, curing the applied liquid composition in the mould such as to obtain a solid surface unit, and removing the solid surface unit from the mould.

In the context of the present invention, 'providing a sanitary surface unit' means that such a sanitary surface unit is produced by carrying out the process steps. However, in the process step 'providing a negative mould', 'providing' does not (necessarily) mean that the negative mould is first produced from scratch. In this case, 'providing a negative mould' can also mean, for example, that the negative mould is purchased or retrieved from a warehouse in order to carry out the process according to the invention.

The liquid polyurea composition must have such flow properties that the liquid polyurea composition can be applied with the selected application method. If the liquid polyurea composition is applied by spraying, as described below, it must be sufficiently sprayable.

The 'curing' in the method according to the invention is to be understood as meaning that the liquid polyurea composition must be cured only to such an extent that it can be further processed without running, deforming or otherwise being destroyed. Further processing can, for example, be the removal of the sanitary surface unit from the mould or the application of further layers. 'Curing' therefore does not mean that no further hardening takes place after further processing.

The invention also concerns the solid polyurea surface unit is obtainable by the steps described in the previous paragraph. The sanitary surface unit preferably has a surface area of less than 5 m², less than 3 m², or less than 1 m².

Polyurea is known in the art for being extremely durable, waterproof coating material which is resistant to abrasion and scratching. Polyurea coatings are particularly attractive for coating large surfaces onto which the material is commonly sprayed at high temperatures and under high pressure conditions.

These methods for applying the polyurea coatings are however not suited to provide surfaces for small areas, for example surfaces of sanitary appliances or sanitary equipment.

The shape of the negative mould defines the shape of the sanitary surface unit. It may for example provide for a sanitary surface unit in the shape of a surface of sanitary appliance such as a shower tray, a bathtub, a water basin, a drinking fountain, or similar sanitary appliances. It may also provide a sanitary surface unit with the shape of a sanitary equipment or accessory, such as a cushion for a bathtub, a bath or shower grab handle, a shower shelf or similar sanitary equipment.

The term "sanitary surface" as used herein refers to a surface of a sanitary appliance or equipment. Sanitary fittings are not considered as sanitary equipment.

Producing the solid sanitary surface unit using a mould before its application to an area of an appliance of equipment provides the advantage that the place of production is not necessarily the place of use or of application of the surface unit. The surface unit can therefore be fabricated in one location, for example an industrial production plant, and subsequently applied to an appliance or installed onto a supporting structure at a second location, for example a bathroom of a residential property or a hospital.

Mounting on the associated parts of an appliance or installing on a supporting structure renders the sanitary surface unit a sanitary appliance or a sanitary equipment.

As a result, sanitary surface units of can be fabricated readily at industrial scale. The fabricated sanitary surface units can be subjected to quality tests to check the physical parameters, such as elasticity, hardness of the material, surface structure, as well as tears and other defects or imperfections at the production site. It can therefore be assured that sanitary surface units meet a defined quality standard before their installation and use.

This is particularly advantageous for sanitary surfaces since these surfaces must withstand harsh mechanical and chemical treatments

As a further advantage of this method, the application of the liquid polyurea composition to the mould may be automated. It is also possible to automate one or more of the other production steps of the method. The fabrication of the solid surface unit may be a fully automated process.

The mould used for producing the sanitary surface unit is a negative mould. Using a negative mould provides the advantage that it permits for imprinting a desired surface pattern or structure, such as structures or patterns comprising ridges, protrusions, such as nobs, indentations, or grooves on the sanitary surface unit, respectively the top layer of the sanitary surface unit. The surface structures or pattern may for example be suited to provide anti-slip properties or to guide water towards a drain. Fabrication of the surface unit in a negative mould may also provide it with a high gloss finish, with stone, wood or hologram optics, or it may comprise a 3D logo.

The liquid polyurea composition may be a poly-aspartic acid ester composition. The inventors found that poly-aspartic acid ester compositions, and in particular aliphatic poly-aspartic acid ester compositions are a polyurea composition which are particularly suited for producing the sanitary surface units according to this invention, as they provide sufficient material hardness and chemical resistance to withstand abrasive use as well as exposure to corrosive compounds used to clean these appliances. These properties are of particular importance in light of the regulatory norms, for example the applicable DIN norm 14527, which shower trays must meet in order to achieve market approval.

In addition, poly-aspartic acid ester compositions are advantageous compared to other polyurea compositions, as they can be applied particularly well by low pressure spray processes. In addition, there are poly-aspartic ester compositions that cure particularly quickly in comparison. Surfaces made of poly-aspartic acid ester polyureas are also easier to rework than other polyurea surfaces. This means that scratches can be polished particularly well. Properties such as whiteness and gloss can also be adjusted particularly well with poly-aspartic acid ester surfaces, which is especially important for products such as sanitary surface units.

It is particularly surprising that poly-aspartic acid ester compositions are suitable for the method according to the invention. This is because poly-aspartic acid ester compositions are primarily known for application to floors, wherein the components are first mixed in the liquid state and the resulting mixture is then spread on the floor. The fact that poly-aspartic acid ester compositions are also suitable for spray applications, in particular for the production of coatings for sanitary surface units, is a very unexpected finding. The skilled person would therefore not have readily considered poly-aspartic acid ester compositions for these applications.

The liquid polyurea composition may be applied to the mould by different methods, such as brushing or rolling. Preferably, the liquid polyurea composition is sprayed onto the mould. This application method is particularly suited as it easily adapts to various shapes of the mould and can be readily applied to portions with corners and edges without significant variation in thickness.

In a preferred embodiment of this invention, the liquid polyurea composition is free or substantially free of volatile organic compounds (VOCs). In this embodiment the solvent of the liquid polyurea composition consists substantially of water or consists entirely of water.

The terms "substantially free" and "consists substantially" as used herein mean that means that specific further VOCs respectively solvents can be present in very small amounts which do not materially affect the characteristics of the composition. Such VOCs or further solvents may be present at not more than 1 vol%, preferably not more than 0.5 vol% in the liquid polyurea composition.

The omission of VOCs from the polyurea composition results in a shorter curing time of the composition. For this reason, VOC-free polyurea compositions cannot be applied to the mould by brushing or rolling. These compositions must be applied by spraying.

Spraying of the liquid polyurea composition allows for the reproducible production of layers with consistent thickness. A solidified polyurea layer may for example have a thickness of 0.1 mm to up to 0.3 mm, of up to 0.5mm, of up to 0.7mm, or of up to 1mm, preferably of 0.3 mm to 0.7 mm. It is however also possible to produce thicker layers with this method, for example layers of up to 10 mm.

Optionally, the steps of applying a layer of the liquid polyurea composition and curing the composition are repeated at least once to obtain a surface unit having two or more layers. In this way a surface unit of greater thickness can be obtained.

One of the advantages in providing a relatively thin layer of the above stated thickness in combination with a VOC free or substantially free polyurea composition is that the applied polyurea layer cures extremely rapidly under ambient conditions, in particular at room temperature. Curing times of less than less than 30 seconds, or less than 15 seconds, or even around 5 seconds or less can be achieved.

While the polyurea composition may be cured at temperatures ranging from 5°C to 60°C, it is preferred that the composition cures at ambient temperatures, for example at temperatures from 10°C to 30°C, or from 15°C to 25°C.

Curing the sanitary surface unit under ambient conditions, in particular ambient temperatures, is energy efficient since no heat needs to be applied to the composition during the curing process. Due to the extremely rapid curing of the sanitary surface unit under ambient conditions the fabrication process of this invention consumes a fraction of the energy and time required for thermoforming or manufacturing mineral cast sanitary acrylic basins.

The polyurea formulation may comprise further additives such as colorants, wetting agents and stabilizers known in the art.

The inventors found that using high pressure spraying equipment is less suited to produce a surface unit which meets the requirements of sanitary surfaces. This is due to the formation of micrometre scale air bubbles which are included in the poly-aspartic acid ester surface unit when high pressure spraying is used. High pressure spraying, which is commonly used to cover large surface area with polyurea coating, uses compressed air for atomization of the liquid coating. The use of a pressurized air flow leads to the formation of microscopic air inclusions in the solidified composition.

In a preferred embodiment, the liquid polyurea composition is therefore applied to the mould using low pressure spray equipment.

The term low pressure spraying equipment as used herein refers to spraying equipment operating at air pressures of 10 to 100 psi, corresponding to 6.9 kPa to 690kPa, at the spray nozzle. Preferably the liquid composition is pumped out of the spray equipment without compressed air supply.

This contradicts the generally accepted understanding of the skilled person that such a system would be expected to produce a better result when applied at significantly higher pressures. This is because one would expect the layers to be applied more quickly at higher pressures, which would be particularly desirable in view of the fast reaction times of such polyurea coatings. However, it was found that the relatively low pressure range specified leads to an improved surface structure.

In a preferred embodiment, the liquid polyurea composition is applied to the negative mould using a mixing equipment, for example a Quadro mixer device, which mixes the composition comprising the polyurea components with an activator, preferably Isocyanate, in the nozzle of the mixing equipment.

The mixture is then pumped out through an atomising spray nozzle without the use of compressed air. The atomizing spray nozzle provides for an application of the sprayed composition over a wider area and in a thinner layer as a conventional nozzle. It therefore contributes to a rapid disposition process of the liquid polyurea composition to the negative mould.

In a preferred embodiment, the polyurea composition comprises at least two components. The at least two components are heated to a temperature ranging from 55 °C to 75 °C, preferably ranging from 60 °C to 70 °C, more preferably ranging from 63 °C to 67 °C, most preferably of 65 °C. And the at least two components are mixed and sprayed at this temperature using an atomizing spray nozzle.

It was found that the best mixing results of the individual components can be achieved with these temperatures/temperature ranges, as the components have optimum viscosity properties at these temperatures.

In the context of the present invention, 'a component' does not mean an ingredient of a mixture, but 'a component' is a substance or mixture which is stored as a component until use separately from any other components which may be present. For example, a polyurea two-component system may consist of a first component comprising a plurality of ingredients including an amine and a second component comprising an isocyanate.

The liquid polyurea composition comprises a first component containing a polyurea binder, which is mixed with a second component containing the isocyanate activator in the nozzle of the spraying equipment. To facilitate efficient mixing of the two components, the viscosities of these compositions should match. This is achieved by mixing the compositions in the nozzle at a defined temperature at which the viscosities of the two compositions are the same or substantially the same. The mixture is then directly applied to the negative mould. It is important that the suitable mixing temperature is maintained in the nozzle during the spraying process.

The first component contains a first and a second poly aspartic acid ester with the general formula:

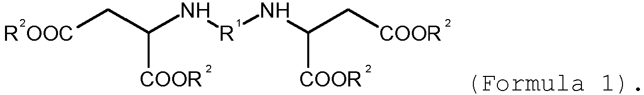

R² is selected from the group consisting of methyl, ethyl, propyl, and butyl. Preferably R² is ethyl.

R¹ of the first poly aspartic acid ester is an aliphatic group comprising up to 20 carbon atoms, and comprising at least one cycloaliphatic group. R¹ of the second poly aspartic acid ester is an aliphatic group comprising up to 20 carbon atoms, and is linear or branched, preferably is branched.

A linear or branched aliphatic group is to be understood in such a way that this group does not include cyclic structures.

It was found that the use of a single poly aspartic acid ester alone does not produce the desired chemical and physical properties. A mixture of a poly aspartic acid ester with a cycloaliphatic group and with a linear or branched aliphatic group leads to a much better result for application to a sanitary surface unit.

On the one hand, the reaction rate can be adjusted by modulating the ratios of various poly aspartic acid esters. Linear or branched poly aspartic acid esters lead to a fast reaction time, which is generally desirable. However, curing too quickly is impractical even with a spray process, as there is also a short time between mixing the components and applying them to the surface. Therefore, the reaction time can be adjusted by adding a cyclic poly aspartic acid first so that the composition remains manageable in practice.

However, it was found that in addition to the reaction rate, other properties can be optimised by using more than one poly aspartic acid ester. It was found that by using a cyclic together with a branched poly aspartic acid ester, the shore hardness of the resulting polyurea composition can be improved, which is an important property of a sanitary surface unit.

In addition, the inventors have found that the use of a linear or branched poly aspartic acid ester alone causes the resulting polyurea surface to start yellowing after a few days or weeks. Such yellowing is not observed when a mixture of a linear or branched poly aspartic acid ester and a cyclic poly aspartic acid ester is used.

The long-term stability of the unreacted first component, which contains the poly aspartic acid ester, is similar. In practice, the first component is not mixed with the second component containing the isocyanate component immediately after its preparation in order to obtain the polyurea coating. Therefore, the components must be stored for weeks or months before use. It has been found that phase separation of the first component occurs after only a few hours or days after its preparation if only a linear or branched poly aspartic acid ester is used. If a cyclic poly aspartic acid ester is also present in the first component in addition to the linear or branched poly aspartic acid ester (for example in a mass ratio of 1:1 to the cyclic or branched poly aspartic acid ester), phase separation takes place much more slowly or not at all.

The above-mentioned advantages of polyurea surfaces based on poly aspartic acid esters over other polyurea surface coatings are further enhanced by the use of the above-mentioned mixture of different poly aspartic acid ester educts. In particular, the chemical resistance (especially to cleaning agents), reworkability, whiteness and gloss can be further improved.

Typically, with poly aspartic acid esters for the production of polyurea surface coatings, one would expect that only a certain poly aspartic acid ester with certain properties would be used.

If other properties are required (e.g. a slower reaction rate), a different poly aspartic acid ester would be used as a starting material. However, the skilled person would not expect an improvement in any of the above properties if two or more poly aspartic acid esters were mixed together.

In a preferred embodiment, the first poly aspartic acid ester has the formula: 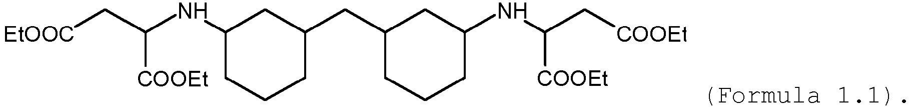 Additionally or alternatively, the second poly aspartic acid ester has the formula:

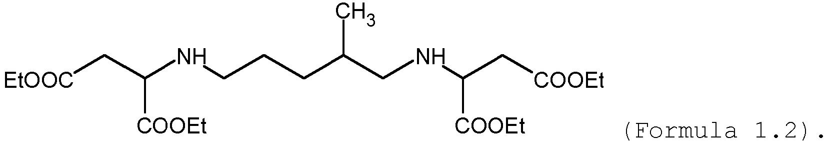

In the context of the invention, Et is to be understood as ethyl.

The poly aspartic acid esters of Formulae 1.1 and 1.2 are available, for example, from Covestro AG. The product Desmophen NH 1420 consists essentially of the substance in Formula 1.1 and has an equivalent weight of approximately 276 g per equivalent amine; the product Desmophen NH 1220 consists essentially of the substance in Formula 1.2 and has an equivalent weight of approximately 234 g per equivalent amine.

Especially with a mixture of poly aspartic acid ester with a cyclic aliphatic group according to Formula 1.1 and a branched poly aspartic acid ester according to Formula 1.2 as part of the first component, the above mentioned advantages of the mixture of different poly aspartic acid esters can be achieved.

In the context of the present invention, the term "or" is to be understood as an exclusionary disjunction. "A or B" states that exactly one of the two statements is true (if the disjunction is true).

In a preferred embodiment, the first poly aspartic acid ester and the second poly aspartic acid ester are present in a mass ratio ranging from 1:1.5 to 1.5:1, preferably ranging from 1:1.3 to 1.3:1, more preferably ranging from 1:1.1 to 1.1:1, most preferably of 1:1.

As described above, the long-term stability of the first component can be enhanced significantly when using mixtures of a linear or branched poly aspartic acid ester and a poly aspartic acid ester with a cycloaliphatic group. As a result, the first component is much less prone to phase separation than if only a linear or branched poly aspartic acid ester were used alone.

In a preferred embodiment, the first component comprises, in relation to the total mass of the first component, one or more poly aspartic acid esters with a combined mass fraction of 72 %-w/w to 92 %-w/w, preferably 77 %-w/w to 87 %-w/w, more preferably 80 %-w/w to 84 %-w/w, most preferably 82 %-w/w. Additionally or alternatively, the first component comprises, again in relation to the total mass of the first component, a catalyst with a mass fraction of 0.75 %-w/w to 4.75 %-w/w, preferably 1.75 %-w/w to 3.75 %-w/w, more preferably 2.50 %-w/w to 3.00 %-w/w, most preferably 2.75 %-w/w.

Preferably, the catalyst is water.

The addition of an organic acid, for example ethylhexanoic acid, or water can accelerate the formation of polyurea from poly aspartic acid esters. However, it was found that the addition of organic acids such as ethylhexanoic acid is not at all suitable for the present invention. The addition of such acids as catalysts leads to poor curing of the end product (which is reflected in relatively low Shore D values) and to a strong formation of bubbles, which are trapped in the end product. It has been found that the addition of water is much more suitable in the context of the present invention. It does not affect the hardness and leads to negligible bubble formation.

In a preferred embodiment, the isocyanate equivalent weight of the second component is 173 g/eq. to 193 g/eq., preferably 178 g/eq. to 188 g/eq., more preferably 181 g/eq. to 185 g/eq. Additionally or alternatively, the first component and the second component are present in the liquid polyurea composition in a mass ratio ranging from 1:0.40 to 1:0.80, preferably ranging from 1:0.50 to 1:0.70, more preferably ranging from 1:0.55 to 1:0.65, most preferably of 1:0.60.

A mass ratio of 1:0.40 between the first component and the second component means that 0.40 grams of the second component are added for every gram of the first component.

The isocyanate equivalent weight is the number of grams of a given product that contains one equivalent of isocyanate groups.

In a preferred embodiment, the aliphatic poly-isocyanate of the second component is poly(hexamethylene diisocyanate).

Poly(hexamethylene diisocyanate) is available, for example, from Covestro AG. The product Desmodur N 3600 consists essentially of poly(hexamethylene diisocyanate) and has an isocyanate equivalent weight of approximately 183 g per equivalent.

In a preferred embodiment, the sanitary surface unit has a Shore D hardness value of at least 70, preferably at least 72, more preferably at least 74.

The Shore D hardness value of the sanitary surface unit is measured 48 h after removing the surface unit form the mould and the total thickness of the material is 6 mm.

The Shore D hardness value is determined using the testing standard DIN 53505 (version from August 2000).

Such a Shore D hardness is ideal for surfaces of sanitary surface units.

To facilitate the subsequent removal of the solid surface unit from the mould, it is advantageous to treat the surface of the mould onto which the liquid polyurea composition is applied. The pre-treatment may comprise applying a primer surface into the mould. This primer surface may for example comprise or consist of mould release agents for PU and/or polyurea coatings known in the art.

Optionally, back reinforcement layers can be applied to the solid surface unit. Preferably the reinforcement material is layered onto the solid surface unit while it is still disposed on the mould.

To facilitate a rapid production process, reinforcement materials which harden rapidly, such as polyurethane (PU) potting compounds, for example foams, are particularly advantageous for this purpose. Alternatively or additionally, it is possible to use other reinforcement compounds, such as epoxy resins, chipboard, or plywood.

By applying a reinforcing layer, the final shape of the sanitary surface unit is established and is not significantly changed afterwards. This means, for example, that the sanitary surface unit is not manufactured by first producing a multi-layer planar sheet, which is then pressed into a final shape. Instead, the shape of the sanitary surface unit is already predetermined by the negative mould onto which the layers are sprayed.

In a preferred embodiment, the one or more reinforcement layers is/are applied by spraying using low pressure spray equipment.

In another preferred embodiment, at least two reinforcement layers made from the same reactive 1C or 2C, preferably 2C, system are applied. Thereby, at least one application parameter is changed in such a way that the at least two reinforcement layers have a different density. The at least one application parameter is preferably selected from the group consisting of: the output fluid pressure; the input air pressure; the output flow rate; the spraying distance; the temperature of the low pressure spray equipment; the ambient humidity; and the mixing ratio of the components.

One-component and two-component systems (also referred to as 1C and 2C systems) for such applications are known in the art. The phrase 'at least two reinforcement layers made from the same reactive 1C or 2C, preferably 2C, system' means that the same component(s) is/are used for both reinforcement layers concerned.

As an example, in the case of polyurethane (PU) reinforcement layers, the starting materials typically comprise an isocyanate component and an alcohol component. In this case, the phrase means that the same isocyanate component and the same alcohol component are used for both reinforcement layers concerned.

The output fluid pressure refers to the pressure at which the material is expelled from the spray nozzle. The input air pressure is the pressure of the air entering the spray nozzle. The output flow rate denotes the volume or mass of the mixed material that the spray system discharges over a given period. The spraying distance is the distance between the spraying nozzle and the surface to be coated. The temperature of the low pressure spray equipment is the temperature of the starting materials at the time they are discharged from the spraying nozzle.

Surprisingly, it has been shown that different densities of the resulting material can be produced by changing the application parameters mentioned without changing the starting materials. Changing the application parameters leads, among other things, to different amounts of air being trapped in the finished reinforcement layers. Particularly in the case of polyurethane (PU) reinforcement layers, the cross-linking of the components is also altered by changing the application parameters, which can lead to a different density.

The fact that the density of the resulting material can be adjusted by only changing the application parameters is very advantageous. This means that no change of material is necessary, saving a lot of time, which is extremely important for industrial production processes.

In a preferred embodiment, the one or more reinforcement layers is/are made from at least one composition selected from the group consisting of:
- a first polyurethane composition comprising
   - 1.00 part by weight of a polyether polyol formulation containing at least one filler, and
   - 0.50 parts by weight to 0.90 parts by weight, preferably 0.60 parts by weight to 0.80 parts by weight, more preferably 0.65 parts by weight to 0.75 parts by weight of a modified diphenylmethane-4,4'-diisocyanate; and
- a second polyurethane composition comprising
   - 1.00 part by weight of a polyether polyol formulation containing at least one filler,
   - 0.01 parts by weight to 0.20 parts by weight, preferably 0.05 parts by weight to 0.15 parts by weight of a foaming agent, and
   - 0.75 parts by weight to 1.15 parts by weight, preferably 0.85 parts by weight to 1.05 parts by weight, more preferably 0.90 parts by weight to 1.00 parts by weight of a modified diphenylmethane-4,4'-diisocyanate.

A suitable polyether polyol formulation containing at least one filler is available, for example, under the trade name Multitec VP.PU 40MT04 by Covestro AG.

A suitable modified diphenylmethane-4,4'-diisocyanate is available, for example, under the trade name Multitec VP.PU 10MT07 by Covestro AG.

A suitable foaming agent is available, for example, under the trade name Multitec VP.PU 50MT01 by Covestro AG.

The Multitec products mentioned are now also available from Plixxent GmbH & Co. KG under the trade name Plixxopol.

Preferably, if multiple compositions are applied for the one or more reinforcement layers and if they are sprayed using low pressure spray equipment, the multiple compositions are stored in separate containers in the low pressure spray equipment and the change of the composition takes place through control of a machine programme.

In a preferred embodiment, a first reinforcement layer is applied with a layer thickness of 2 mm to 6 mm, preferably of 3 mm to 5 mm, more preferably of 3.5 mm to 4.5 mm, most preferably of approximately 4 mm. This first reinforcement layer has a density of 800 kg/m³ to 1200 kg/m³, preferably of 900 kg/m³ to 1100 kg/m³, more preferably of 950 kg/m³ to 1050 kg/m³, most preferably of approximately 1000 kg/m³. Then, a second reinforcement layer is applied with a layer thickness of 9 mm to 15 mm, preferably of 10 mm to 14 mm, more preferably of 11 mm to 13 mm, most preferably of approximately 12 mm. This second reinforcement layer has a density of 300 kg/m³ to 700 kg/m³, preferably of 400 kg/m³ to 600 kg/m³, more preferably of 450 kg/m³ to 550 kg/m³, most preferably of approximately 500 kg/m³. Optionally, a third reinforcement layer is applied with a layer thickness of 0.5 mm to 3.5 mm, preferably of 1.0 mm to 3.0 mm, more preferably of 1.5 mm to 2.5 mm, most preferably of approximately 2 mm. The third reinforcement layer has a density of 800 kg/m³ to 1200 kg/m³, preferably of 900 kg/m³ to 1100 kg/m³, more preferably of 950 kg/m³ to 1050 kg/m³, most preferably of approximately 1000 kg/m³.

The first and third reinforcement layers in this preferred embodiment are comparatively hard due to their density and give the sanitary surface unit stability. The second reinforcement layer is a foam material with a lower density than the other two reinforcement layers.

A reinforcement layer can consist of several sub-layers with the same application parameters, which are applied one after the other to achieve the desired thickness. Application is typically done by moving a spray nozzle in a back-and-forth manner along an axis until the entire surface is covered with a sub-layer. Preferably, a first sub-layer is applied using a movement of the spray nozzle along a first horizontal axis and a second sub-layer is applied using a movement of the spray nozzle along a second horizontal axis that is perpendicular to the first horizontal axis. This achieves the best possible coverage of the surface and a uniform layer structure.

Preferably, a sub-layer of the first and/or third reinforcement layer has a thickness of 1 mm. Preferably, a sub-layer of the second reinforcement layer has a thickness of 3 mm.

Preferably, the first polyurethane composition forms in particular the first and third reinforcement layers with the aformentioned densities. Preferably, the second polyurethane composition forms in particular the second reinforcement layer with the aformentioned densities.

The solid surface unit with or without back reinforcement may subsequently be applied to an area of an appliance or an equipment to be covered. The surface unit preferably forms the topcoat of the appliance or equipment.

With respect to what is known in the art, this invention provides a scalable method for producing and applying high quality surface onto an appliance or an equipment, which meets the stringent requirements for sanitary surfaces, at unprecedented speed.

Different from conventional methods of providing polyurea topcoats this invention concerns the provision of a stand-alone sanitary surface unit which can be installed on the intended site or applied to an support structure.

In a preferred embodiment the production of the surface unit of this invention is environmentally friendly as the polyurea composition is free or substantially free of volatile organic compounds. The polyurea composition is also free of styrene. Preferably, the isocyanate content of the activator composition has a monomer content of less than 0.1%.

The production-related waste is therefore VOC- and styrene-free and does not have to be disposed of as hazardous waste.

### Short description of the drawings

Exemplar embodiments of the invention are disclosed in the description and illustrated by the drawings in which
Figure 1 shows a flowchart of an example of a fabrication process according to the present invention;
Figure 2 is a schematic illustration of a first possible embodiment of this invention showing a surface unit with a layered polyurethane back reinforcement disposed in a negative mould;
Figure 3 is a schematic illustration of a second possible embodiment of this invention showing a surface unit with a layered wood and polyurethane back reinforcement disposed in a negative mould.

### Examples of embodiments of the present invention

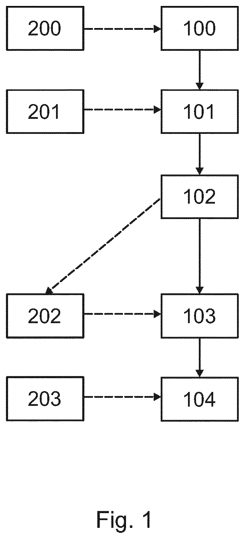

Figure 1 illustrates schematically the fabrication process for the sanitary protective surface unit according to this invention, including several optional steps.

A mould, preferably a negative mould, matching the shape of a surface of a sanitary appliance to be covered, is provided in a first step 100. Optionally the mould may be pre-treated 200 with an agent or a coating which facilitates the release of the solidified surface unit formed in the mould.

A liquid polyurea composition may be prepared 201.

Preferably the liquid polyurea composition used to fabricate the sanitary surface unit comprises a first component containing one or more poly aspartic binders and a catalyst, for example an organic acid. The preferred liquid polyurea composition further contains a second component comprising aliphatic poly-isocyanate, which is the activator component.

The one or more poly aspartic binder of the first component may for example comprise one or more poly aspartic acid esters.

The catalyst of the first component may for example be an organic acid.

The monomer content of the isocyanate activator component is preferably less than 0.1 vol% at 65°C.

To apply a VOC-free polyurea composition comprising the first component and the second component, the two components must be mixed immediately before and/or during spraying the mixture onto the mould to avoid solidification of the mixture in the spraying equipment.

The two components were mixed in the nozzle of the spraying equipment, which was a Quadro mixer in this fabrication process, for the duration of the entire spraying process. The mixture was sprayed onto the negative mould through a nozzle with an atomizer attachment.

The polyurea formulation may comprise further additives such pigments and filler materials known in the art. The further additives may comprise one or more pigments, such as titan dioxide, one or more wetting and dispersing additives, one or more anti-settling agents, one or more light stabilizers, such as a hindered amine light stabilizer, and/or one or more UV absorber, for example an absorber of the hydroxyphenyl benzotriazole class.

Preferably, the one or more anti-settling agents comprise Aerosil R 972 from Evonik (a fumed silica after-treated with dimethyldichlorosilane). Preferably, the hindered amine light stabilizer is Tinuvin 292 from BASF. Preferably, the one or more UV absorber comprise Tinuvin 1130 from BASF (a UV absorber from the hydroxyphenyl benzotriazole).

The first component of the liquid polyurea composition may comprise 60 vol% to 80 vol%, of the poly aspartic binders, 0.5 vol% to 3 vol% of the catalyst, and, optionally, 10 vol% to 20 vol% of further additives.

Titan dioxide provides a white coloration of the surface unit, which is particularly suited as surface of sanitary appliances.

Wetting agents and/or dispersing agents serve to stabilise the colour pigments, for example titan dioxide.

Anti-settling agents can be added to prevent the colour pigments from precipitating.

Stabilizers further provide for a consistently homogenous composition.

UV absorbers may be added to improve the spectral coverage of the surface unit in the UV-A and/or UV-B range.

The water content varies according to the weight of additives contained in the formulations. Preferably, water is the only solvent used in the formulation.

The liquid polyurea composition is then applied to the mould in a layer 101. The composition may be applied in different ways, for example by spraying, rolling or by brushing. However, a liquid polyurea composition as described above, and in particular the composition free of volatile organic compounds (VOCs) solidifies too quickly and can therefore not be applied using rolling or brushing.

Preferably, the polyurea composition is sprayed onto the mould at a temperature which permits efficient mixing of the first component and the second component of the polyurea composition. The temperature should be chosen such that the viscosities of the two components match each other, i.e. the viscosities of the two components are the same or substantially the same. The mixture is then directly applied to the negative mould. The suitable mixing temperature depends on the formulation of the two compositions which define their viscosity temperature profile.

This mixing temperature may for example be 65°C ± 2°C for the preferred liquid polyurea composition described above. The suitable mixing temperature is preferably provided in the nozzle of the equipment and maintained during the spraying process.

In a preferred embodiment the polyurea composition is sprayed onto the mould, preferably using a low-pressure spraying equipment, to form a layer. A thin layer as used herein is a layer of 0.1 mm to up to 0.3 mm, up to 0.5 mm, up to 0.7 mm, or up to 1 mm, preferably of 0.3 mm to 0.7 mm.

The composition is preferably applied using a combined low-pressure spraying and mixing equipment with an atomizer nozzle.

A spraying pressure at the nozzle used in the fabrication of the surface unit according to this invention of 87 psi to 92 psi, corresponding to 600 kPa to 635 kPa delivered a uniform layer.

Once the liquid polyurea composition is applied to the mould, the polyurea layer is allowed to cure 102 under ambient conditions, in particular at room temperature. A formulation comprising aliphatic aspartic acid ester polymers in an aqueous solution applies in a layer according to this method typically cures in less than 30 seconds and even of around 15 seconds, or around 5 seconds or less. Thinner layers have quicker curing times.

A 1mm layer of the above-described VOC free composition containing one or more poly aspartic binders typically cured in less than 5 seconds.

Optionally, further polyurea layers may be applied on top of the solidified surface unit layer to increase the thickness of the surface unit.

Additionally or alternatively, the solidified surface unit may be provided with structural reinforcement material while in the mould 202. The structural reinforcement is a so-called back-reinforcement, which is applied to the backside of the surface unit, i.e the side which facing the appliance when the surface unit is applied to it. The backside of the surface unit faces away from the environment when the surface unit is installed.

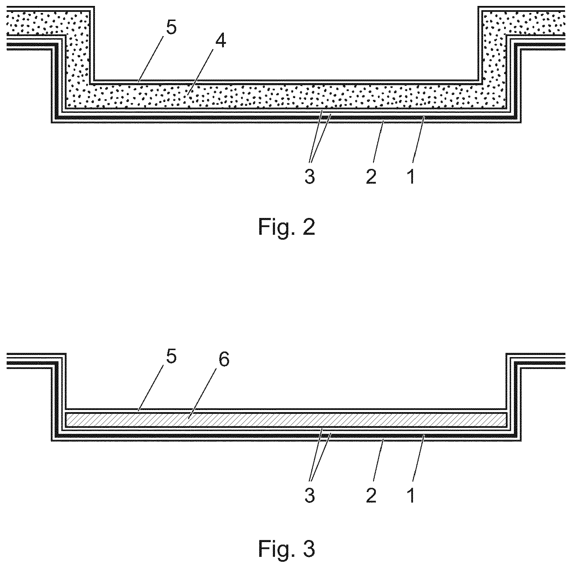

Possible examples of structural reinforcements of the backside of the solidified surface unit temporarily disposed in a negative form are shown in Figures 2 and 3. Figures 2 and 3 schematically depict the solidified polyurea surface unit 1 in the negative mould 2.

In Figure 2 the solidified surface unit is covered with one or more inner polyurethane (PU) potting layers 3. A PU foam material 4 is interposed as an intermediate layer between this inner potting layers 3 and an outer potting layer 5, which may consist of the same material as the inner potting layer 3.

A suitable PU potting material has a density of around 1000 ± 100 kg / m3. The foam material typically has a density of 300 kg / m3 to 800 kg / m3, preferably 500 ± 50 kg / m3.

In Figure 3 a second possible embodiment of a reinforcement arrangement is shown. In this example a plank of wooden material 6, for example plywood or chipboard, provides the intermediate layer between an inner potting layer 3 and an outer potting layer 5. Preferably the wooden reinforcing material is a chipboard of the type V100, which is particularly suited for its installation with the surface unit on sanitary appliances, for example shower trays. Additionally or alternatively a glass fibre reinforcement may be applied to the backside of the surface unit.

The intermediate layer may however also be made of a different material, for example an epoxy resin, a polyester resin, and/or a PU mineral cast.

The intermediate layer 4, 6 may act as a shock absorbent, providing the surface unit not only with additional robustness, but also its resilience to mechanical impacts. The inner and outer potting layers 3, 5 needs to be sufficiently robust and rigid to contain the intermediate layer 4, 6.

The potting layers 3, 5 may be made of PU material. Other suitable materials may however also be used as reinforcement. The potting layer may for example also be provided by polyurea compositions.

The solid polyurea surface unit with or without back reinforcement can be removed from the mould 103 to provide a finished surface unit configured for installation or its application to a support structure. The surface unit can be fabricated in a first location and readily applied to a sanitary appliance or equipment in a second location. This allows for production which is independent from the application process. The surface unit may for example be prefabricated such that it can be readily provided when needed. Also, as mentioned above, the production can be automated and is suitable for delivering surface units at industrial scale.

Surface units produced according to this method may be protect to areas of small to medium size, specifically areas of less than 5 m², less than 3 m², or less than 1 m². Sanitary appliances typically have surface areas in need of protection of this size. The surface units produced according to this invention may however also be applied to other areas of these dimensions.

In a subsequent step the sanitary surface unit is install or applied to a support structure 104. The surface unit is applied such that it forms the topcoat of the sanitary appliance or equipment.

The surface units produced according to this invention is extremely versatile in design. The surface units may be applied to a great variety of support structures.

Based on their excellent durability, resilience and hardness, surface units comprising esters of aliphatic aspartic acid, and in particular surface units comprising one or more poly aspartic binders are particularly suited as sanitary surfaces, which are regularly exposed to highly abrasive treatment, mechanical impact and corrosive chemicals.

### Example formulation

This example shows a formulation comprising a mixture of a poly aspartic acid ester with a branched linking group and a poly aspartic acid ester with cycloaliphatic groups.

Table 1 shows the trade designation, supplier, and the equivalent weights of the poly aspartic acid esters, the polyisocyanate and the additive used.

**Table 1: chemical description, trade designations and suppliers of the polyisocyanate, the poly aspartic acid esters and additives**

| Chemical Description | Trade Designation | Supplier | Equivalent Weight g / eq. |
|---|---|---|---|
| Branched poly aspartic acid ester | Desmophen NH 1220 | Covestro AG | 234 |
| Cyclic poly aspartic acid ester | Desmophen NH 1420 | Covestro AG | 276 |
| Aliphatic polyisocyanate | Desmodur N 3600 | Covestro AG | 183 |
| Wetting and dispersing additive | Disperbyk 163 | BYK | |

**Table 2: ingredients of the first component with mass fractions in relation to the total weight of the first component**

| Constituents | Mass fraction %-w/w |
|---|---|
| Desmophen NH 1220 | 41 |
| Desmophen NH 1420 | 41 |
| Disperbyk 163 | 0.5 |
| Titanium dioxide | 12.5 |
| Water | 2.75 |

Table 2 shows the ingredients of the first component of the exemplary composition. The two poly aspartic acid esters are present in a 1:1 mixing ratio relative to their mass. Water is used here as a reaction accelerator. A wetting and dispersing agent is also added, as well as titanium dioxide for colour adjustment.

The first component is mixed with the second component comprising the aliphatic polyisocyanate Desmodur N 3600 in a mass ratio of 1 part of the first component to 0.6 parts of the second component.

This composition leads to a pot life of approx. 30 seconds, which turned out to be well suited for manufacturing. A cured polyurea surface according to this composition has a Shore D hardness of 72 measured with the method according to testing standard DIN 53505 (version from August 2000).

## Claims

1. Method for providing a sanitary surface unit (1), comprising
a. providing (100) a negative mould (2) of the desired shape of the sanitary surface unit (1),
b. applying (101) a layer of a liquid polyurea composition to the mould (2),
c. curing (102) the applied liquid polyurea composition in the mould (2) to obtain a solid sanitary surface unit (1), and
d. removing (1) the surface unit from the mould (2); wherein the liquid polyurea composition comprises
- a first component, containing one or more poly aspartic binders, for example one or more poly aspartic acid esters, and a catalyst, for example an organic acid, and
- a second component comprising an aliphatic poly-isocyanate;
**characterised in that**
the first component contains a first and a second poly aspartic acid ester with the general formula: 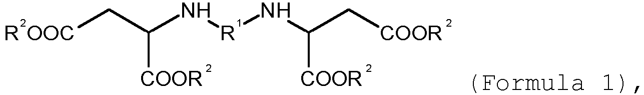 wherein
- R² is selected from the group consisting of methyl, ethyl, propyl, and butyl, preferably R² is ethyl;
- R¹ of the first poly aspartic acid ester is an aliphatic group comprising up to 20 carbon atoms, and comprising at least one cycloaliphatic group;
- R¹ of the second poly aspartic acid ester is an aliphatic group comprising up to 20 carbon atoms, and is linear or branched, preferably is branched.

2. The method of claim 1, further comprising reinforcing the surface unit by applying (2) one or more reinforcement layers, for example a layer comprising polyurethane (PU) potting compound (3), onto the backside of the surface unit (1), wherein the reinforcement layer is preferably disposed onto the surface unit (1) before the surface unit (1) is removed from the mould (2).

3. The method of claim 2, wherein the one or more reinforcement layers is/are applied by spraying using low pressure spray equipment.

4. The method of any of claims 1 to 3, wherein the polyurea composition is applied by spraying.

5. The method of claim 4, wherein
- the polyurea composition comprises at least two components;
- the at least two components are heated to a temperature ranging from 55 °C to 75 °C, preferably ranging from 60 °C to 70 °C, more preferably ranging from 63 °C to 67 °C, most preferably of 65 °C; and
- the at least two components are mixed and sprayed at this temperature using an atomizing spray nozzle.

6. The method of any of claims 1 to 5, wherein the applied polyurea composition is cured at a temperature ranging from 5 °C to 60 °C, or from 10 °C to 30 °C, preferably ranging from 15 °C to 25 °C.

7. The method of any of claims 1 to 5, wherein the polyurea composition is applied to obtain a layer having a thickness of 0.1 mm to 1 mm, or of 0.3 mm to 0.7 mm.

8. The method of any one of claims 1 to 7, wherein
- the first poly aspartic acid ester has the formula: 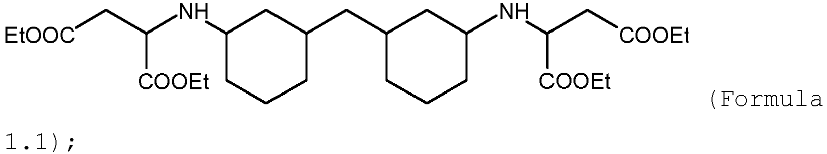 and/or
- the second poly aspartic acid ester has the formula:

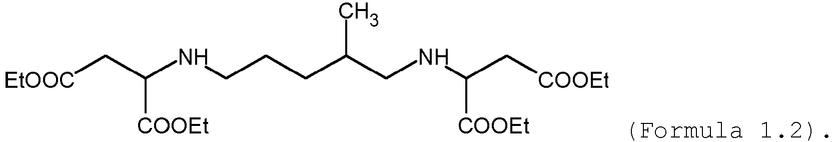

9. The method of any of claims 1 to 8, wherein the first poly aspartic acid ester and the second poly aspartic acid ester are present in a mass ratio ranging from 1:1.5 to 1.5:1, preferably ranging from 1:1.3 to 1.3:1, more preferably ranging from 1:1.1 to 1.1:1, most preferably of 1:1.

10. The method of any of claims 1 to 9, wherein the liquid polyurea composition further comprises a pigments and filler materials, such as titan dioxide, a wetting and dispersing additive, an anti-settling agent, a light stabilizer, such as a hindered amine light stabilizer, and/or a UV absorber, for example an absorber of the hydroxyphenyl benzotriazole class.

11. The method of any of claims 1 to 10, wherein component 1 comprises 60 vol% to 80 vol%, of the poly aspartic binders, 0.5 vol% to 3 vol% of the catalyst, and, optionally, 10 vol% to 20 vol% of pigments and filler material.

12. The method of any of claims 1 to 10, wherein the first component comprises, in relation to the total mass of the first component:
- one or more poly aspartic acid esters with a combined mass fraction of 72 %-w/w to 92 %-w/w, preferably 77 %-w/w to 87 %-w/w, more preferably 80 %-w/w to 84 %-w/w, most preferably 82 %-w/w; and/or
- a catalyst, preferably water as a catalyst, with a mass fraction of 0.75 %-w/w to 4.75 %-w/w, preferably 1.75 %-w/w to 3.75 %-w/w, more preferably 2.50 %-w/w to 3.00 %-w/w, most preferably 2.75 %-w/w.

13. The method of any of claims 1 to 12, wherein
- the isocyanate equivalent weight of the second component is 173 g/eq. to 193 g/eq., preferably 178 g/eq. to 188 g/eq., more preferably 181 g/eq. to 185 g/eq.; and/or
- the first component and the second component are present in the liquid polyurea composition in a mass ratio ranging from 1:0.40 to 1:0.80, preferably ranging from 1:0.50 to 1:0.70, more preferably ranging from 1:0.55 to 1:0.65, most preferably of 1:0.60.

14. A solid polyurea surface unit obtainable by a method of any of claims 1 to 13, comprising a polyurea surface layer having a thickness of 0.1 mm to 0.3 mm, to 0.5mm, to 0.7mm, or to 1mm, preferably of 0.3 mm to 0.7 mm.

15. A sanitary appliance or a sanitary equipment provided with the surface unit obtained by any of claims 1 to 13.

## Patentansprüche

1. Verfahren zur Herstellung einer sanitären Oberflächeneinheit (1), umfassend
a. Bereitstellen (100) einer Negativform (2) der gewünschten Form der sanitären Oberflächeneinheit (1),
b. Aufbringen (101) einer Schicht aus einer flüssigen Polyharnstoffzusammensetzung auf die Form (2),
c. Aushärten (102) der aufgetragenen flüssigen Polyharnstoffzusammensetzung in der Form (2), um eine feste sanitäre Oberflächeneinheit (1) zu erhalten, und
d. Entnahme (1) der Oberflächeneinheit aus der Form (2);
wobei die flüssige Polyharnstoffzusammensetzung:
- eine erste Komponente umfasst, die ein oder mehrere Polyasparaginsäure-Bindemittel, beispielsweise einen oder mehrere Polyasparaginsäureester, und einen Katalysator, beispielsweise eine organische Säure, enthält, und
- eine zweite Komponente umfasst, die ein aliphatisches Polyisocyanat enthält;
**dadurch gekennzeichnet, dass** die erste Komponente einen ersten und einen zweiten Polyasparaginsäureester mit der allgemeinen Formel enthält: 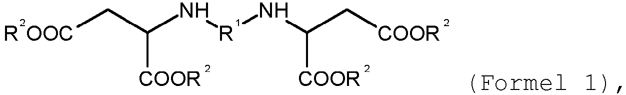 wobei
- R² ausgewählt ist aus der Gruppe bestehend aus Methyl, Ethyl, Propyl und Butyl, vorzugsweise ist R² Ethyl;
- R¹ des ersten Polyasparaginsäureesters eine aliphatische Gruppe ist, welche bis zu 20 Kohlenstoffatomen umfasst, und mindestens eine cycloaliphatische Gruppe umfasst;
- R¹ des zweiten Polyasparaginsäureesters eine aliphatische Gruppe ist, welche bis zu 20 Kohlenstoffatome umfasst, und linear oder verzweigt ist, vorzugsweise verzweigt ist.

2. Verfahren nach Anspruch 1, das ferner das Verstärken der Oberflächeneinheit durch Aufbringen (2) einer oder mehrerer Verstärkungsschichten, beispielsweise einer Schicht aus Polyurethan (PU)-Vergussmasse (3), auf die Rückseite der Oberflächeneinheit (1) umfasst, wobei die Verstärkungsschicht vorzugsweise auf der Oberflächeneinheit (1) angeordnet wird, bevor die Oberflächeneinheit (1) aus der Form (2) entfernt wird.

3. Verfahren nach Anspruch 2, wobei die eine oder mehrere Verstärkungsschichten durch Sprühen unter Verwendung einer Niederdruck-Sprühvorrichtung aufgebracht wird/werden.

4. Verfahren nach einem der Ansprüche 1 bis 3, wobei die Polyharnstoffzusammensetzung durch Sprühen aufgebracht wird.

5. Das Verfahren nach Anspruch 4, wobei
- Die Polyharnstoffzusammensetzung mindestens zwei Komponenten enthält;
- die mindestens zwei Komponenten auf eine Temperatur von 55 °C bis 75 °C, vorzugsweise von 60 °C bis 70 °C, besonders bevorzugt von 63 °C bis 67 °C, am meisten bevorzugt von 65 °C, erhitzt werden; und
- die mindestens zwei Komponenten gemischt werden und bei dieser Temperatur mit einer Zerstäuberdüse versprüht werden.

6. Verfahren nach einem der Ansprüche 1 bis 5, wobei die aufgetragene Polyharnstoffzusammensetzung bei einer Temperatur im Bereich von 5 °C bis 60 °C oder von 10 °C bis 30 °C, vorzugsweise im Bereich von 15 °C bis 25 °C, ausgehärtet wird.

7. Verfahren nach einem der Ansprüche 1 bis 5, wobei die Polyharnstoffzusammensetzung aufgetragen wird, um eine Schicht mit einer Dicke von 0,1 mm bis 1 mm oder von 0,3 mm bis 0,7 mm zu erhalten.

8. Das Verfahren nach einem der Ansprüche 1 bis 7, wobei
- der erste Polyasparaginsäureester die Formel 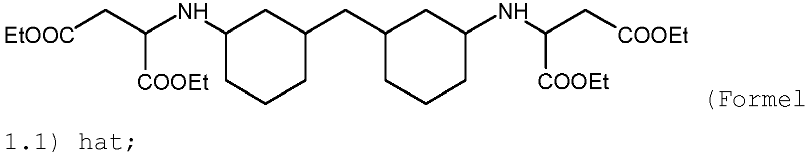 und/oder
- der zweite Polyasparaginsäureester die Formel: 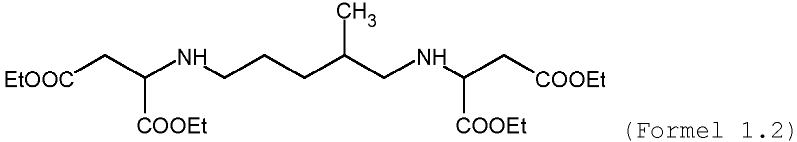 hat.

9. Verfahren nach einem der Ansprüche 1 bis 8, wobei der erste Polyasparaginsäureester und der zweite Polyasparaginsäureester in einem Massenverhältnis im Bereich von 1:1,5 bis 1,5:1, vorzugsweise im Bereich von 1:1,3 bis 1,3:1, noch bevorzugter im Bereich von 1:1,1 bis 1,1:1, am meisten bevorzugt von 1:1, vorliegen.

10. Verfahren nach einem der Ansprüche 1 bis 9, wobei die flüssige Polyharnstoffzusammensetzung ausserdem Pigmente und Füllstoffe, wie Titandioxid, ein Benetzungs- und Dispersionsadditiv, ein Antiabsetzmittel, einen Lichtstabilisator, wie einen gehinderten Amin-Lichtstabilisator, und/oder einen UV-Absorber, beispielsweise einen Absorber der Hydroxyphenylbenzotriazolklasse, enthält.

11. Verfahren nach einem der Ansprüche 1 bis 10, wobei die erste Komponente 60 Vol.-% bis 80 Vol.-% der Polyasparaginsäure-Bindemittel, 0,5 Vol.-% bis 3 Vol.-% des Katalysators und optional 10 Vol.-% bis 20 Vol.-% der Pigmente und des Füllmaterials umfasst.

12. Verfahren nach einem der Ansprüche 1 bis 10, wobei die erste Komponente, bezogen auf die Gesamtmasse der ersten Komponente:
- einen oder mehrere Polyasparaginsäureester mit einem kombinierten Massenanteil von 72 %-Gew./Gew. bis 92 %-Gew./Gew., vorzugsweise 77 %-Gew./Gew. bis 87 %-Gew./Gew., noch bevorzugter 80 %-Gew./Gew. bis 84 %-Gew./Gew., am meisten bevorzugt 82 %-Gew./Gew. umfasst; und/oder
- einen Katalysator, vorzugsweise Wasser als Katalysator, mit einem Massenanteil von 0,75 %-Gew./Gew. bis 4,75 %-Gew./Gew., vorzugsweise 1,75 %-Gew./Gew. bis 3,75 %-Gew./Gew., besonders bevorzugt 2,50 %-Gew./Gew. bis 3,00 %-Gew./Gew., am meisten bevorzugt 2,75 %-Gew./Gew. umfasst.

13. Das Verfahren nach einem der Ansprüche 1 bis 12, wobei
- das Isocyanat-Äquivalentgewicht der zweiten Komponente 173 g/Äquivalent bis 193 g/Äquivalent, vorzugsweise 178 g/Äquivalent bis 188 g/Äquivalent, noch bevorzugter 181 g/Äquivalent bis 185 g/Äquivalent beträgt; und/oder
- die erste Komponente und die zweite Komponente in der flüssigen Polyharnstoffzusammensetzung in einem Massenverhältnis im Bereich von 1:0,40 bis 1:0,80, vorzugsweise im Bereich von 1:0,50 bis 1:0,70, noch bevorzugter im Bereich von 1:0,55 bis 1:0,65, am meisten bevorzugt von 1:0,60 vorhanden sind.

14. Feste Polyharnstoff-Oberflächeneinheit, erhältlich durch ein Verfahren nach einem der Ansprüche 1 bis 13, umfassend eine Polyharnstoff-Oberflächenschicht mit einer Dicke von 0,1 mm bis 0,3 mm, bis 0,5 mm, bis 0,7 mm oder bis 1 mm, vorzugsweise von 0,3 mm bis 0,7 mm.

15. Sanitärgerät oder Sanitärausrüstung mit der nach einem der Ansprüche 1 bis 13 erhaltenen Oberflächeneinheit.

## Revendications

1. Procédé de fabrication d'une unité de surface sanitaire (1), comprenant
a. fournir (100) un moule négatif (2) de la forme souhaitée de l'unité de surface sanitaire (1),
b. appliquer (101) une couche d'une composition de polyurée liquide sur le moule (2),
c. durcir (102) la composition de polyurée liquide appliquée dans le moule (2) pour obtenir une unité de surface sanitaire solide (1), et
d. en retirant (1) l'unité de surface du moule (2);
dans laquelle la composition de polyurée liquide comprend
- un premier composant contenant un ou plusieurs liants poly aspartiques, par exemple un ou plusieurs esters d'acide poly aspartique, et un catalyseur, par exemple un acide organique, et
- un second composant comprenant un poly-isocyanate aliphatique ;
**caractérisé par le fait que** le premier composant contient un premier et un second ester d'acide poly aspartique de formule générale : 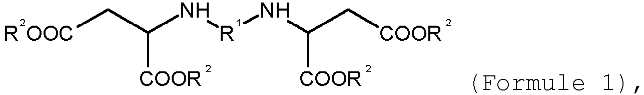 dans laquelle
- R² est choisi dans le groupe constitué par le méthyle, l'éthyle, le propyle et le butyle, de préférence R² est l'éthyle ;
- R¹ du premier ester d'acide poly aspartique est un groupe aliphatique comprenant jusqu'à 20 atomes de carbone et comprenant au moins un groupe cycloaliphatique ;
- R¹ du second ester d'acide poly aspartique est un groupe aliphatique comprenant jusqu'à 20 atomes de carbone, et est linéaire ou ramifié, de préférence ramifié .

2. Le procédé de la revendication 1, comprenant en outre le renforcement de l'unité de surface par l'application (2) d'une ou plusieurs couches de renforcement, par exemple une couche comprenant un composé d'empotage de polyuréthane (PU) (3), sur la face arrière de l'unité de surface (1), la couche de renforcement étant de préférence disposée sur l'unité de surface (1) avant que l'unité de surface (1) ne soit retirée du moule (2).

3. La méthode de la revendication 2, dans laquelle la ou les couches de renforcement sont appliquées par pulvérisation à l'aide d'un équipement de pulvérisation à basse pression.

4. Procédé de l'une quelconque des revendications 1 à 3, dans lequel la composition de polyurée est appliquée par pulvérisation.

5. La méthode de la revendication 4, dans laquelle
- la composition de polyurée comprend au moins deux composants ;
- les au moins deux composants sont chauffés à une température comprise entre 55 °C et 75 °C, de préférence entre 60 °C et 70 °C, de préférence entre 63 °C et 67 °C, de préférence encore à 65 °C ; et
- les au moins deux composants sont mélangés et pulvérisés à cette température à l'aide d'une buse de pulvérisation.

6. Procédé de l'une quelconque des revendications 1 à 5, dans lequel la composition de polyurée appliquée est durcie à une température allant de 5 °C à 60 °C, ou de 10 °C à 30 °C, de préférence allant de 15 °C à 25 °C.

7. Procédé de l'une quelconque des revendications 1 à 5, dans lequel la composition de polyurée est appliquée pour obtenir une couche ayant une épaisseur de 0,1 mm à 1 mm, ou de 0,3 mm à 0,7 mm.

8. La méthode de l'une des revendications 1 à 7, dans laquelle
- le premier ester d'acide poly aspartique a la formule : 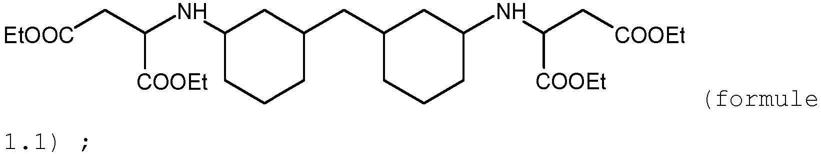 et/ou
- le second ester d'acide poly aspartique a la formule :

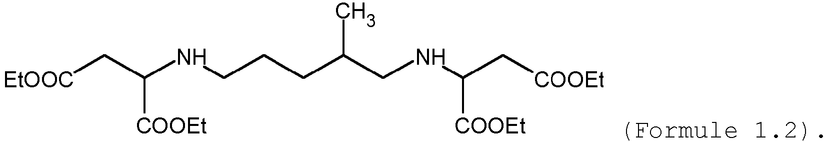

9. Procédé de l'une quelconque des revendications 1 à 8, dans lequel le premier ester d'acide poly aspartique et le second ester d'acide poly aspartique sont présents dans un rapport massique allant de 1:1,5 à 1,5:1, de préférence allant de 1:1,3 à 1,3:1, plus préférentiellement allant de 1:1,1 à 1,1:1, de manière très préférée de 1:1.

10. Procédé de l'une quelconque des revendications 1 à 9, dans lequel la composition de polyurée liquide comprend en outre un pigment et des matériaux de charge, tels que du dioxyde de titane, un additif mouillant et dispersant, un agent anti-décantation, un stabilisateur de lumière, tel qu'un stabilisateur de lumière à amine encombrée, et/ou un absorbeur d'UV, par exemple un absorbeur de la classe des hydroxyphénylbenzotriazoles.

11. La méthode de l'une des revendications 1 à 10, dans laquelle le composant 1 comprend 60 % à 80 % des liants poly aspartiques, 0,5 % à 3 % du catalyseur et, éventuellement, 10 % à 20 % des pigments et de la matière de charge.

12. Procédé de l'une quelconque des revendications 1 à 10, dans lequel le premier composant comprend, par rapport à la masse totale du premier composant :
- un ou plusieurs esters d'acide poly aspartique dont la fraction massique combinée est comprise entre 72 % p/p et 92 % p/p, de préférence entre 77 % p/p et 87 % p/p, plus préférentiellement entre 80 % p/p et 84 % p/p, de préférence encore entre 82 % p/p ; et/ou
- un catalyseur, de préférence de l'eau en tant que catalyseur, avec une fraction de masse de 0,75 % p/p à 4,75 % p/p, de préférence de 1,75 % p/p à 3,75 % p/p, de préférence de 2,50 % p/p à 3,00 % p/p, de préférence encore de 2,75 % p/p.

13. La méthode de l'une des revendications 1 à 12, dans laquelle
- le poids équivalent d'isocyanate du second composant est compris entre 173 g/éq. et 193 g/éq., de préférence entre 178 g/éq. et 188 g/éq., plus préférentiellement entre 181 g/éq. et 185 g/éq. ; et/ou
- le premier composant et le second composant sont présents dans la composition de polyurée liquide dans un rapport de masse allant de 1:0,40 à 1:0,80, de préférence allant de 1:0,50 à 1:0,70, plus préférentiellement allant de 1:0,55 à 1:0,65, de préférence encore de 1:0,60.

14. Unité de surface solide en polyurée pouvant être obtenue par un procédé de l'une quelconque des revendications 1 à 13, comprenant une couche de surface en polyurée ayant une épaisseur de 0,1 mm à 0,3 mm, à 0,5 mm, à 0,7 mm, ou à 1 mm, de préférence de 0,3 mm à 0,7 mm.

15. Appareil sanitaire ou équipement sanitaire muni de l'unité de surface obtenue selon l'une quelconque des revendications 1 à 13.
